Europäisches Patentamt

European Patent Office

Office européen des brevets

(11) Publication number: **0 211 433 B1**

# EUROPEAN PATENT SPECIFICATION

(45) Date of publication of patent specification: **15.04.92**   (51) Int. Cl.5: **B32B  27/32**

(21) Application number: **86110784.5**

(22) Date of filing: **04.08.86**

(54) **Metallizable polypropylene film.**

(30) Priority: **06.08.85 US 762905**

(43) Date of publication of application:
**25.02.87 Bulletin  87/09**

(45) Publication of the grant of the patent:
**15.04.92 Bulletin  92/16**

(84) Designated Contracting States:
**BE CH DE FR GB IT LI NL SE**

(56) References cited:
**EP-A- 0 021 672**
**EP-A- 0 053 925**
**EP-A- 0 122 495**

(73) Proprietor: **HERCULES INCORPORATED**
**Hercules Plaza**
**Wilmington Delaware 19894(US)**

(72) Inventor: **Reid, Donald Eugene**
**153B Buttonwood Road**
**Landenberg Pennsylvania 19350(US)**

(74) Representative: **Lederer, Franz, Dr. et al**
**Lederer, Keller & Riederer Patentanwälte**
**Lucile-Grahn-Strasse 22**
**W-8000 München 80(DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

This invention relates to polypropylene film having a layer of a propylene-ethylene copolymer upon which a coating layer of metal may be deposited by a conventional metallizing method, after the copolymer layer is subjected to a corona discharge treatment.

It is standard practice to use a slip agent to reduce the coefficient of friction (COF) of the surface of polypropylene films. By this means, blocking of adjacent layers of film on mill rolls is prevented and the film can readily be unwound for use or for further processing. In the absence of the slip agent, the layer-to-layer coefficient of friction (COF) is so great that smooth unwinding of the film is virtually impossible. Typical slip or antiblock agents are the higher molecular weight fatty acid amides such as stearamide or oleamide. It has become standard practice in the art to incorporate concentrations of about 0.2 to about 0.5%, possibly as little as 0.1%, by weight of such compounds into polyolefin films as slip agents.

U.S. Patent 4,294,882 discloses a heat-sealable polypropylene film having a layer of olefinic copolymer on one or both surfaces and optionally having a between 0.05 and 5% of a conventional slip agent in the polypropylene film base. The patentees are concerned with the achievement of antistatic properties, specifically without a corona discharge treatment.

There is a demand for films carrying a metal coating on one or both surfaces, either for functional or aesthetic reasons. The films employed for this purpose are usually composites consisting of a polypropylene core layer having, on at least one of its surfaces a relatively thin layer of a propylene-ethylene copolymer. This copolymer layer is subjected to a corona discharge treatment and the coating metal is then deposited by such methods as electroplating, sputtering or vacuum metallizing. However, the presence of conventional concentrations of slip agent in the film destroys the adhesion of the metal coating to the film. U.S. Patent 4,294,882, being concerned with the achievement of antistatic properties in a heat-sealable polypropylene film laminate, are not at all concerned with this problem of maintaining the adhesion of a metal coating to the film after a corona discharge treatment.

It has been proposed to prepare metallizable films by removing the slip agent from the film. For instance, U.S. Patent 4,508,786 points out that conventionally used slip agents, "even when added in a slightest amount of about 0.015 by weight, ...make adhesion onto the metallized surface impossible." That patent proposes that all trace of a slip agents be omitted entirely from the prior art laminate. Such films have, however, not been particularly popular on a commercial scale due to the high COF of the film surfaces, and resultant blocking of the film upon unwinding caused by the lack of slip agent.

According to the invention, a metallizable polypropylene film comprising a polypropylene layer having on one or both surfaces a 0,5 to 5 micrometer (2 to 20 gauge) layer of propylene-ethylene copolymer that contains 1 to 10% by weight of ethylene and no slip agent and that has been subjected to corona discharge treatment to enhance its metal adhesion characteristics, is characterized in that a critical, non-conventional concentration of 0.03 to 0.15% by weight, based on the polypropylene, of a fatty acid amide slip agent containing from 16 to 22 carbon atoms is incorporated into the polypropylene layer.

Preferably the fatty acid amide slip-agent concentration is between 0.05 and 0.1% by weight, based on the polypropylene.

The polypropylene layer is preferably the homopolymer, although copolymers of propylene with minor amounts of ethylene or an alpha-olefin can also be used. Typical commercially available film-forming propylene homopolymers are crystalline or isotactic in their molecular structure and have a melt flow rate of about 2 to 10 dg/min. The polypropylene is compounded with conventional additives such as antioxidants, light stabilizers and inorganic antacids such as calcium oxide or magnesium aluminum hydroxide carbonate hydrate, in addition to the fatty acid amide slip agent.

The fatty acid amide slip agent can be any long chain fatty acid amide having 16 to 22 carbon atoms. Preferred are erucamide, behenamide, oleamide and stearamide.

The layer of propylene-ethylene copolymer on one or both surfaces of the polypropylene layer is much more receptive to corona discharge treatment and more adherent to the subsequently applied metal coating than is propylene homopolymer.

Preferably the layer of propylene-ethylene copolymer that is subjected to corona discharge treatment contains 3 to 7% by weight of ethylene as determined by infrared spectroscopy, and should be between 0,8 to 3,8 micrometer (3 and 15 gauge) in thickness, most preferably between 1 and 2 micrometer (4 and 8 gauge). The coating thickness may be the same on both sides of the polypropylene.

The absence of slip agent in the layer of propylene-ethylene copolymer in conjunction with the severely limited level of slip agent in the polypropylene has two surprisingly paradoxical results: the amount of the amide that blooms to the surface of the copolymer on the side intended to be metallized is so infinitesimal that it does not destroy the adhesion of the metal coating, while the amount that blooms to the other surface of the polypropylene or its coating of propylene-ethylene copolymer, if present, is sufficient to provide an acceptable degree of antiblock effect.

If heat sealability is required, a coating of heat sealable copolymer is required on the nonmetallizable surface of the polypropylene layer. It can but need not be the same copolymer as that employed on the side intended to be metallized. The 0,5 to 5 micrometer (2 to 20 gauge) layer of propylene-ethylene copolymer that contains 1 to 10% by weight of ethylene and is used in the metallizable polypropylene film according to the invention, makes an excellent heat seal layer. Other useful heat-sealable coating layers include low density polyethylene, ethylene-olefin copolymers such as ethylene-butene or ethylene-octene copolymers and ethylene-propylene-butene terpolymer.

The composite films according to the invention, can be prepared by extrusion coating, coextrusion or lamination. Coextrusion is a preferred technique as it enables one to apply an extremely thin layer most efficiently.

The corona discharge treatment is a conventional treatment and is carried out in a known manner to a value of 0,036 to 0,06 N/m (36 to 60 dynes/cm) and preferably 0,04 to 0,05 N/m (40 to 50 dynes/cm). Only the surface of the film to be metallized is subjected to the corona discharge treatment.

The metal coating can be applied to the corona-treated copolymer layer by any conventional method such as sputtering, vacuum deposition or electroplating. Vacuum deposition is a preferred method. The most frequently used coating metal is aluminum, although other metals such as gold, silver and copper are also used.

## Example 1

A base film 0,68 mm (27 mils) thick and composed of 100 parts polypropylene, 0.10 part hindered phenolic antioxidant, 0.05 part of magnesium aluminum hydroxide carbonate hydrate antacid, 5.5 parts of $\alpha$-methyl styrene-vinyl toluene copolymer and 0.06 part of erucamide is extruded and cast on a roll. The resultant cast sheet is coated on one side with a 0,05 mm (2 mil) layer of a random propylene-ethylene copolymer containing 3.5 wt. % ethylene and on the other side with a 0,1 mm (4 mil) layer of a random propylene-ethylene copolymer containing 4.25 wt. % ethylene. This two-side coated sheet was then oriented 5 times in the machine direction and 9 times in the transverse direction on a tenter. The maximum web temperature during orientation was 156°C.After orientation, the film was heat set and corona treated on the metallizable side (the 3.5% ethylene copolymer side) to a value of 0,04 N/m (40 dynes/cm). After metallization of the corona-treated surface, the resultant film showed excellent metal adhesion (0% metal lift with #610 Scotch[R] tape) and also excellent metal adhesion after thermal lamination to the polyethylene side of a polyethylene/adhesive/polypropylene composite film. The brightness and clarity of the metallized surface was outstanding, and this metallized film showed no tendency to block (sealable side to metal surface) during further processing operations.

## Examples 2 to 7

These compositions show the change in film properties as the concentration of erucamide is increased in the base film. A 0,43 mm (17 mil) cast sheet of the base films shown in the table was first coated at 249°C (480°F) with 0,06 mm (2.4 mil) of a 1/1 mixture of the 3.5% ethylene copolymer used in Example 1 and a second such copolymer containing 0.2 wt. % of a 3 micrometer silica material as an antiblock agent. The resultant coating is an ethylene-propylene copolymer containing 3.5 wt. % C2 and 0.10 wt. % silica. The other side of the base casting was coated with 0,03 mm (1.2 mils) of the 3.5% ethylene copolymer mixture at 243°C (470°F). After biaxial orientation (6×6) at 145°C with 10% heat set, the final film was composed of 2 micrometer (8 gauge) of sealable coating, 14.7 micrometer (58 gauge) of base film and 1 micrometer (4 gauge) of metallizable copolymer. The 1 micrometer (4 gauge) metallizable side was corona treated at 75°C with a 32, watts/m$^2$/mm (3.0 watts/ft.$^2$/min). corona exposure and then heat soaked at 40°C for 18 hours to simulate the normal plant processing and shipping time prior to metallization. The treated surface was then metallized with a 2 ohms/square coating of aluminum and evaluated as shown in Table 1.

In Table 1, the original and aged metal adhesion tests are conventional peel tests run on the metallized film using an Instron Tensile Tester wherein strength of the bond and the mode of failure are determined. Low values of the metal lift parameter indicate that the film-to-metal bond is stronger than the film.

To carry out the metal adhesion test, metallized film specimens, 8,9 cm (3-1/2 inches) wide by 10 cm (4-1/2 inches) long, one unaged and one aged for 5 minutes at 100°C, are used. These specimens are taped to a cutting board metal side up in such a way that no wrinkles are present on the film. Strips of Scotch #610 transparent tape are doubled back on themselves 2,5 cm (1 inch) to form a non-adherent tab on one end and applied to the metallized films to cover 7,6 cm (3 inches) of the 8,9 cm (3-1/2 inch) width forming a 5 cm (2 inch) seal and leaving a 2,5 cm (1 inch) tab on both the film side and the tape side. The tape must be applied neatly so that no air is trapped beneath the tape and the tape is scraped three times with a blunt surface to assure good contact. Three peel (T-peel) test samples, 2,5 cm (1 inch) wide (i.e. the width of the transparent tape) and 8,9 cm (3-1/2 inches) long (i.e. the width of the metallized film specimen) are cut from each specimen and tested in a conventional T-peel test on the tensile tester. Test conditions: room temperature; 30,5 cm (12 inches/min.) crosshead speed; span 2,5 cm (1 inch).

In the bond prediction test, the metallized film is heat laminated to a low density polyethylene-coated polypropylene film to simulate actual use where this step is common procedure. In some cases, the original metal-to-polymer bond can be damaged in this procedure that is carried out at a very high temperature. The peel strength and metal lift are then determined on this laminate using the tensile tester by conventional test methods.

The blocking parameter is measured by laying up the sealing surface of a film specimen against the metallizable surface of another film and placing the laid-up specimens between two metal plates in a jig. The plates are then subjected to 10,5 kg/cm$^2$ (150 psi) for 24 hours at 40°C. following that the force required to separate them in a standard T-peel test is determined using an Instron Tensile Tester.

Table 1

| Erucamide Content (phr) | Comparative examples | | | | | Comparative example |
|---|---|---|---|---|---|---|
| | 0 | 0.01 | 0.03 | 0.05 | 0.10 | 0.20 |
| **Metal Adhesion** | | | | | | |
| Original (g/in) [2,5 cm] Peak/Peel | 200/148 | 300/217 | 339/218 | 366/207 | 397/217 | 190/137 |
| Original, % Lift | 0 | 0 | 0 | 0 | 0 | 10 |
| Aged(1) (g/in) Peak/Peel | 183/158 | 511/248 | 391/248 | 322/208 | 316/193 | 178/142 |
| Aged, % Lift [2,5 cm] | 0 | 0 | 0 | 0 | 0 | 50 |
| Bond Prediction Test (g/in) Peak/Peel | 184/168 | 205/186 | 191/162 | 186/159 | 188/171 | 134/54 |
| Bond Prediction Test, % Lift | 20 | 30 | 25 | 40 | 25 | 70 |
| Blocking(2) (g/in) [2,5 cm] | 75 | 47 | 44 | 36 | 25 | 4 |
| COF(3) I/I | 0.55/0.50 | 0.55/0.49 | 0.57/0.58 | 0.40/0.39 | 0.21/0.19 | 0.18/0.17 |
| O/O | 0.67/0.57 | 0.73/0.69 | 0.62/0.54 | 0.59/0.57 | 0.47/0.43 | -- |
| I/O | 0.58/0.57 | 0.61/0.63 | 0.55/0.55 | 0.46/0.48 | 0.26/0.26 | -- |

(1) Aged 5 minutes at 100°C.
(2) Blocking after aging under (150 psi) [10,5 kg/cm²] at 40°C for 24 hours.
(3) I = Inside layer of film that is metallizable side.
    O = Outside or heat sealable layer.

## Claims

1. A metallizable polypropylene film comprising a polypropylene layer having on one or both surfaces a 0,5 to 5 micrometer (2 to 20 gauge) layer of propylene-ethylene copolymer that contains 1 to 10% by

5

weight of ethylene and no slip agent and that has been subjected to corona discharge treatment to enhance its metal adhesion characteristics, characterized in that 0.03 to 0.15% by weight, based on the polypropylene, of a fatty acid amide slip-agent containing from 16 to 22 carbon atoms is incorporated into the polypropylene layer.

**2.** A metallizable film as claimed in claim 1, further characterized in that the amount of fatty acid amide slip-agent is between 0.05 and 0.1% by weight, based on the polypropylene.

**3.** A metallizable film as claimed in claim 1 or 2, further characterized in that one surface of the polypropylene layer has a heat sealable copolymer coating.

**Revendications**

**1.** Film en polypropylène pouvant être métallisé comprenant une couche en polypropylène présentant sur l'une ou sur ses deux faces une couche de 0,5 à 5 micromètres (2 à 20 gauges) d'un copolymère propylène-éthylène contenant 1 à 10% en poids d'éthylène et pas d'agent lubrifiant et qui a été soumise à un traitement par décharges lumineuses permettant d'améliorer ses caractéristiques d'adhésion au métal, caractérisé en ce que 0,03 à 0,15 % en poids, par rapport au polypropylène, d'un agent lubrifiant constitué par une amide d'acide gras contenant de 16 à 22 atomes de carbone est incorporé dans la couche de polypropylène.

**2.** Film pouvant être métallisé selon la revendication 1 caractérisé en ce que la quantité d'agent lubrifiant constitué par une amide d'acide gras est comprise entre 0,05 et 0,1 % en poids, par rapport au polypropylène.

**3.** Film pouvant être métallisé selon l'une des revendications 1 ou 2, caractérisé en ce qu'une face de la couche de polypropylène présente un revêtement en copolymère scellable à chaud.

**Patentansprüche**

**1.** Metallisierbare Polypropylenfolie, die eine Lage Polypropylen umfaßt, die an einer oder beiden Oberflächen eine 0,5 bis 5 Mikrometer (2 bis 20 Gauge) dicke Schicht eines Propylen-Ethylen-Copolymers hat, das 1 bis 10 Gew.-% Ethylen und kein Gleitmittel enthält, und die einer Coronaentladungs-Behandlung unterzogen wurde, um ihre Metallbindeeigenschaften zu verstärken, dadurch gekennzeichnet, daß 0,03 bis 0,15 Gew.-%, bezogen auf das Polypropylen, eines Fettsäureamid-Gleitmittels, das 16 bis 22 Kohlenstoffatome enthält, in die Polypropylenschicht eingebaut sind.

**2.** Metallisierbare Schicht nach Anspruch 1, weiter dadurch gekennzeichnet, daß die Menge an Fettsäureamid-Gleitmittel zwischen 0,05 und 0,1 Gew.-% beträgt, bezogen auf das Polypropylen.

**3.** Metallisierbare Schicht nach Anspruch 1 oder 2, weiter dadurch gekennzeichnet, daß eine Oberfläche der Polypropylenschicht eine heißversiegelbare Copolymerbeschichtung hat.